(19) 

**Europäisches Patentamt**
**European Patent Office**
**Office européen des brevets**

(11) **EP 1 685 191 B1**

(12) **EUROPEAN PATENT SPECIFICATION**

(45) Date of publication and mention
of the grant of the patent:
**03.03.2010 Bulletin 2010/09**

(51) Int Cl.:
*C08L 23/10* (2006.01)    *C08J 5/18* (2006.01)
*B32B 27/32* (2006.01)    *C09J 7/02* (2006.01)

(21) Application number: **04790327.3**

(22) Date of filing: **13.10.2004**

(86) International application number:
**PCT/EP2004/011446**

(87) International publication number:
**WO 2005/040270 (06.05.2005 Gazette 2005/18)**

(54) **TRANSPARENT AND COLOURED CAST FILM FOR IN MOULD LABELLING APPLICATION**

TRANSPARENTE UND FARBIGE GEGOSSENE FOLIE FÜR DIE ETIKETTIERUNG IM FORMWERKZEUG

PELLICULE MOULEE TRANSPARENTE OU COLOREE UTILISEE DANS LA FABRICATION D'ETIQUETTES PAR MOULAGE

(84) Designated Contracting States:
**AT BE BG CH CY CZ DE DK EE ES FI FR GB GR HU IE IT LI LU MC NL PL PT RO SE SI SK TR**

(30) Priority: **16.10.2003 IT MI20032009**

(43) Date of publication of application:
**02.08.2006 Bulletin 2006/31**

(73) Proprietor: **Treofan Germany GmbH & Co.KG**
**66539 Neunkirchen (DE)**

(72) Inventors:
• **EMILIANI, Germano**
 **I-44100 Ferrara (IT)**

• **BLERIOT, Hervé**
 **4920 Harze (BE)**
• **CARBONE, Giovanni**
 **I-89812 Pizzo (IT)**
• **CRISAFULLY, Antonino**
 **I-98040 Mei (IT)**

(74) Representative: **Kremer, Viola**
**Treofan Germany GmbH & Co. KG**
**Am Prime Parc 17**
**65479 Raunheim (DE)**

(56) References cited:
**EP-A- 0 757 069**    **WO-A-03/093004**
**US-A- 5 594 070**    **US-B1- 6 489 019**

**Description**

The invention relates to a mono or a multi-layered cast film having at least one layer of a two component polymer compositions. More particularly, the invention relates to labels made from such cast film. The first component of the polymer composition is a high crystallinity polypropylene. The second component is a hetero-phasic polypropylene copolymer. The invention also relates to processes for making such cast films and labels thereof. The cast films according to the invention have characteristics suitable for label application such as low curl, stiffness, good die cutting, good thermal stability, printability and antistatic properties.

Polypropylenes have traditionally been used to make cast film products and bi-axially oriented films. Such films have been used for packaging application and various other purposes. In the field of label application the use of bi-axially oriented polypropylene films has become state of the art, specifically in the area of in-mould labelling. However, problems have been associated with the use of polypropylene films for such label applications, since the requirements differ significantly from those for food packaging films. Curling and sometimes shrinkage is a problem often encountered with the label film. In the course of the in mold labelling process the film is cut into sheets and piled up in a stack. A machinery equipment destacks the label and places a single sheet into the mould. Thereafter a container is formed by injecting or blowing a hot stream of a polymer melt into the mould. Thereby the label becomes an integral part of the container. Such process requires that the label remains flat while being destacked and laid into the mould. Also stiffness of the label is essential in this process. Stiffness, flatness and curl of the film is less relevant in the use of polypropylene films in food packaging application because the film is taken off a roll during the packing process. Flatness and curl does not matter in such a packaging processes.

Numerous proposals have been made for modifying the polymers, the film composition or its structure to improve the properties of the films made thereof. In the area of cast films many of those proposals have involved modification of the polymer to improve the properties of the cast film.

Modifications of the polymer affecting its basic properties are related to the chain regularity, molecular weight and the molecular weight distribution. These parameters taken together affect the degree of crystallinity which determines the processability and the performance. Another proposal in the field of cast films is the use of heterophasic polymers.

Heterophasic PP-copolymers basically have at least a two phase structure consisting of a matrix and a disperse elastomeric phase, often an ethylene-propylene rubber phase. Most commercial heterophasic products result from the production of a first polymer, usually a propylene homopolymer, and the production of a copolymer rubber portion in the presence of the initial homopolymer product which still contains active polymerisation sites (reactor blend). Sometimes they are also referred to as "polypropylene impact copolymers" or block copolymer.

US 5,948,839 discloses a polymer compositions and cast films produced from such polymer compositions. Said composition comprises polypropylene impact copolymer having specified characteristics of rubber content (Fc), crystallisation temperature, melt flow and contains a nucleating agent. The polymer compositions has good processability and is used to produce cast films having desirable properties. The cast film products according to US 5,948,839 are particularly useful in applications requiring a soft, no noise film including products to be used against the skin, such as diapers, adult incontinence pads and feminine hygiene products.

US 5,594,070 discloses a polyolefin resin compositions and oriented microporous films prepared from same comprising an ethylene-propylene block copolymer, a propylene homopolymer or random propylene copolymer and components selected from a low molecular weight polypropylene, a beta-spherulite nucleating agent and an inorganic filler. Processes for forming such films wherein the microporous films have improved breathability, strength, toughness and break elongation are also disclosed.

EP 0 757 069 discloses a blown film or sheet material comprising a broad molecular weight distribution propylene polymer material having a molecular weight distribution Mw/Mn of about 4 to about 60, a melt flow rate of about 0.5 to about 50 dg/min, and xylene insolubles at 25°C of ≥ 94%. A mixture of the broad molecular weight distribution propylene polymer material and a heterophasic olefin polymer composition can also be used.

A need exists in the art for films for label applications having high stiffness and low curl along with good processability of the film and good antistatic properties, cuttabilty and printability.

This object is achieved by the use of a mono or multilayered polypropylene cast film as a label in an in-mould labelling process wherein the container is formed by injection molding, by blow molding or thermoforming, wherein the cast film comprises at least one layer wherein said at least one layer comprises a two component polymer composition of a first component I and a second component II, wherein the first component I is a high crystallinity propylene homopolymer and the second component II is a heterophasic propylene copolymer and wherein the high crystallinity propylene homopolymer has an intermolecular stereoregularity of 94 to 99%, determined by $^{13}$C-NMR spectroscopy.

It has been found that said polymer composition of a high crystallinity polypropylene (HCPP) and a heterophasic propylene copolymer (HP) in at least one layer of the cast film provides a perfect level of stiffness and low curl to the cast film. Such properties make the film extremely suitable for use in in-mould label applications, including injection moulding and blow moulding.

Component I of the polymer composition is a high crystallinity polypropylene (hereinafter HCPP). In general the high crystallinity polypropylene (HCPP) has intermolecular stereoregularity (chain isotacticity) of greater than 93% by weight, preferably from 94 to 99%, more preferably from 95 to 98.5%. Suitable high crystallinity polypropylene (HCPP) resins are as such well known in the art and comprise commercially available products from Basell, from BP Chemical from Chisso and Borealis, e.g the Bormod family product. With the higher intermolecular stereoregularity or higher chain isotacticity the HCPP exhibits higher crystallinity than conventional polymers. Further information relating to HCPP, including methods for preparation of the resin is disclosed in U.S. Pat. No. 5,063,264,.

For the purpose of the present invention, intermolecular stereoregularity (chain isotacticity) can be determined by IR spectroscopy or by means of $^{13}$C-NMR spectroscopy. IR spectroscopy methods are set out in "Integrated Infrared Band Intensity Measurement of Stereoregularity in Polypropylene," J. L. Koenig and A, Van Roggen, Journal of Applied Polymer Science, Vol. 9, pp. 359-367 (1965) and in Chemical Microstructure of Polymer Chains, Jack L. Koenig, Wiley-Interscience Publication, John Wiley and Sons, New York, Chichester, Brisbane, Toronto.

Appropriate methods of $^{13}$C-NMR spectroscopy are disclosed in W.O. Crain, Jr., A. Zambelli, and J.D. Roberts, Macromolecules, 4, 330 (1971) or A. Zambelli, G. Gatti, C. Sacchi, W.O. Crain, Jr., and J.D. Roberts, Macromolecules, 4,475 (1971) or in the alternative C.J. Carman and C.E. Wilkes, Rubber Chem. Technol. 44, 781 (1971).

For the purpose of the present invention HCPP preferably comprise from 98 to 100% by weight of propylene units, with 0 to 2% by weight of ethylene or butylene comonomer, if at all. The melting point of HCPP is preferably from 150 to 170°C, and generally the melt flow index ranges from 1 to 15 g/10 min, with high fluidity HCPP being specifically preferred for cast film. Such high fluidity HCPP have a preferred melt flow index of 5 to 10 g/10 min, at 230°C and a force of 2.16kg (ISO 1133). The atactic content of the HCPP can be determined through extraction of the polymer in boiling xylene. The non soluble residue is usually between 98.5 to 95% by weight, based on the weight of the polymer, corresponding to 1.5 to 5 % by weight, based on the weight of the polymer of soluble atactic content.

HCPP polymers are preferably characterized by a broad molecular weight distribution with a polydispersity index (PI) mainly in the range of 5 to 10 and can be monomodal or bimodal according to the process technology and catalyst used.

The second component of the polymer composition is a heterophasic polypropylene copolymer (hereinafter HP). The heterophasic polypropylene copolymers blended or mixed with the HCPP according to the invention basically have a two phase structure consisting of a homopolymer matrix and a dispersed elastomeric phase. The matrix is derived from a propylene homopolymer, whereas the dispersed elastomeric phase is preferably an ethylene-propylene copolymer rubber (EPR). For the purpose of the instant invention a high molecular weight of HP is preferred. The melt flow index of the HP for extrusion process can be varied in a broad range of 0,2 to 10 g/10min (ISO 1133 at 230°C and 2.16kg load). For the purpose of the present invention HP is preferred having a melt flow rate of 0.6 - 5 g/10min (ISO 1133 at 230°C and 2.16kg load), specifically 0.6 to 2 g/10min, with 0,6 to 0,9 g/10min being most preferred (ISO 1133, at 230°C and 2,16 kg load). The overall ethylene content of HP is usually in the range of 5 to 15% by weight, again based on the weight of the HP. The Vicat softening point (ISO 306 10N) is generally 140 to 160°C, with 145 to 155°C being preferred. The xylene solubles of the HP are usually in the range of 10 to 25 % by weight, preferably 12 to 18% by weight, based on the weight of HP. The xylene solubles include extractables like atactic propylene polymer or low molecular weight polymer and impurities which originate from the homopolymer matrix. Additionally the xylene solubles include the rubber phase. About 5 to 20% by weight xylene soluble of the HP, preferably 8 to 15% by weight results from the rubber phase. Accordingly the HP usually has a rubber content (EPR) of 5 to 20% by weight, preferably 8 to 15% by weight. The higher the rubber content in HP the more softness characteristic of the films will result with decreasing stiffness The xylene soluble intrinsic viscosity (DI/g) can vary from 2 to 3.5 being preferred 2,6 - 3,2. The copolymer phase or rubber phase of the HP is a copolymer of ethylene and propylene. Preferably, the ethylene content of the copolymer phase is in the range of 40 to 65% by weight, and more preferably in the range of 45 to 55 % by weight. Such heterophasic polymers described above are as such well known in the art and include commercial available grades.

The homopolymer matrix phase of the heterophasic copolymer is predominantly propylene homopolymer. For particular applications it may be desirable to incorporate in said homopolymer matrix of the HP compositions a small amount, e.g., up to about 6% by weight, of a second olefin such as ethylene or 1-butene. The incorporation of the optional small amounts of comonomer serves to modify but not substantially alter the properties of the homopolymer phase. In the embodiments where a small amount of olefinic comonomer is incorporated, although technically a copolymer, the product is still referred to as the homopolymer phase. The optional olefinic comonomer is preferably ethylene, preferably in an amount up to about 6% by weight, with 2 to 4% by weight being preferred. However, the homopolymer phases which are substantially homopolymeric polypropylene, i.e., matrix phases produced in the substantial absence of second olefin comonomer, are preferred.

The polymers of the two component composition, HCPP and HP, may be prepared by methods employing conventional polymerisation techniques, such as the Ziegler-Natta polymerisation technique, for example, in a conventional two-step gas phase process. Preferably the polymerisation process may be conducted in a gas phase in the presence of a stereoregular olefin polymerisation catalyst. For example in the process for producing the heterophasic copolymers the homopolymer portion of the heterophasic copolymers is initially produced in a suitable gas phase reactor. This initial homopolymer product containing active catalyst sites is then passed to a second gas phase reactor containing a second fluidized bed. A portion of unreacted monomer from the initial polymerization step is also passed to the second reactor, also containing a second fluidized bed, together with the monomers to be employed in the production of the copolymer phase. The production of copolymer or rubber phase takes place in the second reactor where it may also be desirable to provide molecular hydrogen to control molecular weight and thus intrinsic viscosity and melt flow. The product of the second polymerization is a heterophasic polypropylene copolymer which generally is in a powder form. The powder polymer composition may then be extruded into pellets.

For the purpose of the instant invention the two polymer component composition of the HCPP and HP can be produced by either melt blending or mixing the two polymer components of the composition. Mixtures include mechanical mixtures prepared from the individual components. Generally such individual components are combined as small compression mouldings, such as lenticular, spherical or rod shaped granules and mechanically mixed using suitable devices, e.g. Banbury mixer. . With melt blending an alloy like compound of the two components is produced. Such compound cannot be separated into the individual components. The mixing option is preferred.

The ratio of the two polymer components of the composition can vary. Usually the weight percentage of the HP component shall not exceed the HCPP component. If the composition contains to much of the HP component the stiffness being improved by the HCPP may suffer. Therfore in order to have very goos stiffness and low curling the composition shall have at least 50% by weight of the HCPP component. Preferably the ratio (weight ratio) ranges between 90:10 to 50:50 for HCPP:HP, and more preferable between 80:20 to 60:40 HCPP:HP.

The above described polymer composition is used to produce cast films ranging from 50 to 200$\mu$m, preferably 70 to 180$\mu$m. The cast films according to the invention preferably have a tensile strength of less than 50N/mm$^2$ in both machine direction (MD) and transverse direction (TD), with 20 to 35 N/mm$^2$ being preferred and an elongation at break of less than 1000%, preferably 400 - 700% in both film directions. (ASTM D882 - DIN 53455). The typical haze (ASTM D1003) has a value between 30 - 50% for 80$\mu$m transparent film. The typical opacity (MACBETH D200-II) is 60-80% for the white film.

In a further embodiment a nucleating agent can be added to the two component polymer composition (or specifically to one of the two components). The nucleating agent may include aromatic carboxylic acids and their derivatives, e.g. sodium benzoate, aluminium p-tert-butyl benzoate and aluminium benzoate; metal organic phosphates, e.g. sodium di(4-t-butylphenyl)phosphate and sodium 2,2'-methylene bis(4,6-di-tertiary-butylphenyl)phosphate; benzylidene sorbitol derivatives; talc; polyvinyl cycloalkanes, e.g. polyvinyl cyclohexane; and certain organic dicarboxylic acid derivatives, e.g. sebacic acid. Nucleating agents allow the polymers to be crystallised at a higher temperature during film forming operations. The addition of the nucleating agent to the polymer composition also increases the stiffness of the film product.

In a preferred embodiment, the nucleating agent employed in the invention is benzylidene sorbitol derivatives family (DBS) may be added to the polymer composition in an amount in the range of 50 to 5000 ppm, and preferably in the range of 1000 to 3000 ppm.

The two component polymer composition is used in at least one first layer of the thermoplastic cast film of the invention. In the context of the instant invention cast film is defined to be a substantially non oriented film of thermoplastic polymer made by extruding a molten thermoplastic onto a cooling surface, e.g. onto a chill roll, to thereby solidify the polymer melt to a film and removing the film from such cooling surface without imparting orientation by stretching in either direction.

The mono- or multilayer cast film comprises at least one first layer composed of the above described polymer composition and preferably at least one or more furthers layer/s in said multilayered embodiments. Preferably said first layer comprising the two component polymer composition is the base layer comprising at least 75 to 100% by weight of the polymer composition, with 95 to <100% by weight, based on the weight of the base layer, being preferred. The base layer is defined to be the thickest layer of the multilayer structure generally providing at least 50% of the film thickness, preferably 60 to 100%.

For multilayered films in addition to the base layer made from the polymer composition at least one second layer is provided on at least one surface of the base layer. Preferably such outer second layer is also made from the above described polymer composition, comprising e.g. at least 50 to 100% by weight, preferably 80 to <100% by weight, based on the weight of the outer layer, of the polymer composition. The base layer and the outer layer need not to have identical compositions. Depending on the needs the ratio of HCPP to HP in the respective composition of the base layer and the cover layer can be different. In a further embodiment the cover layer can also be composed of any other polypropylene or polyethylene polymer which is conventionally used for making cast films.

In another preferred embodiment a second outer layer is provided on the opposite surface of the base layer, thereby providing a three layered embodiment of the invention. Again the second outer layer (in fact the third layer of the film) may be made from the above described polymer composition, generally 50 to 100% by weight, preferably 80 to < 100% by weight of the polymer composition. In the alternative such third layer can be composed of other suitable thermoplastic polymers conventionally used for cast films.

Intermediate layers may be implemented between the base layer and the outer layer or layers if desired.

Amongst the various two component polymer compositions described above the respective composition of the outer layers will be chosen independently from each other depending on the demands with respect to surface properties of the film. Specifically the HCPP:HP ratio of the respective composition can be the same or different in each outer layer. In case of non-preferred outer layers which are not made from the two component composition any other polypropylene or polyethylene polymer which is conventionally used for making cast films can be employed. Generally the percentage of both outer layers are in the range of 30 to 50% of the film, with each respective thickness being independent from the other the overall film thickness will range from 50 to 200µm, preferably 70 to 180µm.

If any of the layers described above contains less than 100% by weight of the polymer composition other conventional polymers, such as propylene polymers or polyethylene, or masterbatches will make the rest of the layer. Such masterbatches include suitable additives, e.g. slip agent, antistatic agent and/or lubricants as described further below. For white or coloured embodiments masterbatches contain the respective pigments. In the alternative such additives as mentioned above can also be added directly to the respective polymers.

For such non transparent embodiments of the invention the pigmented layer usually comprises pigments in an amount of 1 to 10% by weight, in particular from 4 to 8% by weight, based on the weight of the pigmented layer. For the purposes of the present invention, the term pigment shall include white pigments as well as coloured pigments. Such pigments generally have a mean particle diameter in the range from 0.01 to a maximum of 5 µm, preferably from 0.01 to 2 µm.

Conventional pigments are materials such as litopone, nano-composite, aluminum oxide, aluminum sulfate, barium sulfate, calcium carbonate, magnesium carbonate, silicates, such as aluminum silicate (kaolin clay) and magnesium silicate (talc), silicon dioxide and titanium dioxide. Calcium carbonate, silicon dioxide, titanium dioxide and barium sulfate are preferably employed.

The titanium dioxide particles generally comprise at least 95% by weight of rutile and are preferably employed with a coating of inorganic oxides and/or of organic compounds containing polar and nonpolar groups. $TiO_2$ coatings of this type are known in the prior art.

The masterbatch, preferably TiO2 batch, generally contains the above described pigments in a concentration of 50 to 80 % by weight, preferably about 60% by weight and is generally based on LDPE, LLDPE, propylene homopolymer or propylene copolymer matrix. The specific gravity of the masterbatch ranges from 1.6 to 2.3 g/cm$^3$, the MFR ranging from 3 to 15 g/10min (ASTM D1238 Cond L) 230°C/2.16kg or MFR ranging from 5 to 18 g/10min (190°C/2.16kg).

In order to improve the adhesion properties of the outer layer or layers at least one surface of the film may be treated via corona, flame, or plasma to thereby enhance the surface tension.

The invention furthermore relates to a process for the production of the multilayered cast film according to the invention by the co/extrusion process. Generally for producing cast films the polymer is fed into an extruder, the molten polymer is extruded through a slot extrusion die onto a chill roll to cool the polymer melt to a solid film.

For the production of the cast film this process is carried out by extruding or coextruding the melt/s of the polymer composition corresponding to the individual layer/s of the film through a flat-film die, taking off the resultant mono- or multilayered film over one or more rolls for solidification, optionally heat-setting the film, and optionally corona- or flame, plasma-treating the film on one side, or on both surface layers.

As it is conventional in the coextrusion process, the polymer blend or polymer mixture of each respective individual layer is firstly compressed and liquefied in an extruder, it being possible for any additives to be already added to the polymer composition or introduced at this stage via a masterbatch. The melts are then forced simultaneously through a flat-film die (slot die), and the extruded multilayered film is taken off on one or more take-off rolls, during which it cools and solidifies. It has proven particularly favourable to keep the take-off roll or rolls, by means of which the extruded film is cooled and solidified, at a temperature from 10 to 90°C, preferably from 20 to 60°C. The casting of the film can be followed generally by heat-setting (heat treatment) thereof, in which the film is held at a temperature from 30 to 90°C for from about 0.5 to 10 seconds. The film is subsequently wound up in a conventional manner by means of a wind-up unit.

As mentioned above optionally one or both, surface(s) of the film is (are), corona- or flame-treated by one of the known methods. For the corona treatment, the film is passed between two conductor elements serving as electrodes, with such a high voltage, usually an alternating voltage (about 10000 V and 10000 Hz), being applied between the electrodes that spray or corona discharges can occur. Due to the spray or corona discharge, the air above the film surface is ionised and reacts with the molecules of the film surface, causing formation of polar inclusions in the essentially non-polar polymer matrix. The treatment intensities are in the usual range, preferably from 38 to 45 dynes/cm after production.

In order to further improve certain properties of the thermoplastic cast film the layers may contain additionally additives in effective amounts. Preferably each layer contains stabiliser and neutralising agent being compatible with the polymers of the respective layers. Optionally the respective baselayer and/or cover layers can contain one or more of the slip agents or antistatic agents or lubricants described in detail below.

Stabilizers are usually added in an amount of between 0.05 and 2% by weight, based on the weight of the layer. Particularly suitable are phenolic stabilizers, alkali metal or alkaline earth metal stearates and/or alkali metal or alkaline earth metal carbonates. Phenolic stabilizers are preferred in an amount from 0.1 to 0.6% by weight, in particular from 0.15 to 0.3% by weight, and having a molecular weight of greater than about 500 g/mol. Pentaerythrityl tetrakis-3-(3,5-di-tert-butyl-4-hydroxyphenyl)propionate and 1,3,5-trimethyl-2,4,6-tris(3,5-di-tert-butyl-4-hydroxybenzyl)benzene are particularly advantageous. Phosphite

Neutralizers are preferably dihydrotalcite, calcium stearate and/or calcium carbonate having a mean particle size of at most 0.7 $\mu$m, an absolute particle size of less than 10 $\mu$m and a specific surface area of at least 40 m$^2$/g.

It has been found additionally that the incorporation of antistatics and lubricants to the cover layers of the cast film is specifically advantageous.

Antistatics such as alkali metal alkanesulfonates, polyether-modified, i.e., ethoxylated and/or propoxylated polydiorganosiloxanes (polydialkylsiloxanes, polyalkylphenylsiloxanes and the like) can be used. Preferred are essentially straight-chain and saturated aliphatic, tertiary amines or esters of polyhydric alcohols. Preferred amines contain an aliphatic radical having 10 to 20 carbon atoms which are substituted by $\omega$-hydroxy-(C$_1$-C$_4$)alkyl groups, where N,N-bis(2-hydroxyethyl)alkylamines having 10 to 20 carbon atoms, preferably 12 to 18 carbon atoms, in the alkyl radical are particularly suitable.. Glycerol monostearate is a preferred polyhydric alcohol. The effective amount of antistatics is in the range from 0.05 to 0.5% by weight, based on the weight of the layer.

Lubricants are higher aliphatic acid amides, higher aliphatic acid esters. The effective amount of lubricant is in the range from 0.01 to 3% by weight, preferably from 0.02 to 1 % by weight. Particularly suitable is the addition of higher aliphatic acid amides in the range from 0.01 to 0.25% by weight in the cover layer. A particularly suitable aliphatic acid amide is erucamide, oleamide, or stearinamide.

The multilayered thermoplastic cast film is highly suitable for the in-mold labeling process, including injection molding, thermoforming and blow molding labelling processes. The cast film is excellent in printability by all conventional processes with outer layers of the two component composition, The labelled container exhibits the desired optically appearance without defects due to the orange-peel effect or bubbles. When used in accordance with the invention, the cast film can be processed and handled extremely well. In particular, the film can be cut and stacked without any problem and thereafter be segregated very well and without errors at high speed. In addition, the cut-to-size label has a very low curl tendency, which enables the label stack to be handled very well.

The following example is provided so as to enable those of ordinary skill in the art to make the cast film of the invention. These examples are not intended to limit the scope of what the inventor regards as his invention.

Example 1

A transparent three-layer film having an ABA layer structure, i.e. a top layer A had been applied to both sides of the base layer B, was extruded by the coextrusion method from a flat-film die at an extrusion temperature of 260°C. One of the top layers A was corona-treated.

The base layer B had the following composition:

73,00% by weight of a high crystalline propylene homopolymer having a xylene - soluble content of 3 % by weight (based on 100% PP) and a vicat softening point of 158°C; and a melt flow index of 7 g/10 min at 230°C and a load of 21.6 N (ISO 1133); (HCPP component)

27,00 % by weight of a heterophasic copolymer having a melt flow index of 0,8g/10min and a Vicat softening point of 150°C (HP component)

The top layers A had the following composition

70,00% by weight of a high crystalline propylene homopolymer having a xylene - soluble content of 3 % by weight (based on 100% PP) and a vicat softening point of 158°C; and a melt flow index of 7 g/10 min at 230°C and a load of 21.6 N (ISO 1133); (HCPP component)

27,00% by weight of a heterophasic copolymer having a melt flow index of 0,8g/10min and a Vicat softening point of 150°C

3,00% by weight of an antistatic & slip masterbatch

All layers contained conventional stabilizer and neutralizing agent in effective amounts, e.g. below 0,15% by weight. Additionally both cover layers contained an effective amount of antistatic and slip agent, e.g. Armostat and a fatty acid amide.

After coextrusion, the coextruded three-layer film was taken off and cooled via a first take-off roll and a further trio of rolls, subsequently corona-treated on one side. The chill roll temperature was about 20°C. The multilayered cast film produced in this way had a surface tension of 42 dynes/cm on one the treated side directly after production. The film had a thickness of approximately 80 $\mu$m, with the thickness of each top layers being about 16 $\mu$m. The film had a density of about 0,89 g/cm$^3$.

Example 2

A transparent film was produced as described in Example 1. The same HCPP, HP and masterbatch as described in example 1 was used. The ratio of HCPP to HP in the base and the cover layer was varied. The base layer contained 60% of the HCPP component and 40% of the HP component. The top layer contained 57,50% by weight of the HCPP component, 40% by weight of the HP component and 2,5% by weight of the antistatic and slip masterbatch. The production conditions were not changed compared with Example 1.

Comparative Example 1

A film was produced as described in Example 1. Instead of the highly isotactic propylene homopolymer, a conventional raw material having a xylene -soluble content of 7 % by weight (based on 100% PP) and a melting point of 165°C and a melt flow index of 3.5 g/ 10 min was employed in the base layer and the cover layers. The remainder of the composition and the production conditions were unchanged compared with Example 1.

Comparative Example 2

A film was produced as described in Example 1. All layers were composed of the HCPP component only and contained no HP. The remainder of the composition and the production conditions were unchanged compared with Example 1.

Comparative Example 3

A film was produced as described in Example 1. All layers were composed of the HP component only and contained no HCPP. The remainder of the composition and the production conditions were unchanged compared with Example 1.

The properties of the films according to example 1 and 2 are described in the table below.

Table 1

| Properties | Unit | Example 1 | Example 2 | Test method |
|---|---|---|---|---|
| Tensile strength MD TD | N/mm2 N/mm2 | 26 24 | 23 25 | ASTM D882- DIN 53455 |
| Elongation at break MD TD | % % | 620 570 | 460 620 | ASTM D882 - DIN 53455 |
| C.O.F film/film (Static) | | 0.45 | 0.55 | ASTM S1894- DIN 53375 |
| Gloss (60°) | % | 25 | 19 | ASTM D 2457 |
| Haze | % | 40 | 42 | ASTM D 1003 |
| Treatment level | Dynes/cm | >42 | >40 | ASTM D 2578 |

Example 3

A three-layered film having an ABA layer structure, i.e. a top layer A had been applied to both sides of the base layer B, was extruded by the coextrusion method from a flat-film die at an extrusion temperature of 260°C. One of the top layers A was corona-treated.

The base layer B had the following composition

60,00% by weight of a high crystalline propylene homopolymer as described in example 1 having a xylene soluble content of 3 % by weight (based on 100% PP) and a vicat softening point of 158°C; the melt flow index of the propylene homopolymer is 7 g / 10 min at 230°C and a load of 21.6 N (ISO 1133); (HCPP component).

24,00 % by weight of a heterophasic copolymer having a melt flow index of 0,8g/10min and a Vicat softening point of 150°C (HP component).

16.00% by weight of a masterbatch containing 70% of TiO2, (carrier PE).

The top layers A consisted of

67,00% by weight of a high crystalline propylene homopolymer (HCPP) having an n-xylene soluble content of 3 % by weight (based on 100% PP) and a vicat softening point of 158°C; the melt flow index of the propylene homopolymer is 7 g /10 min at 230°C and a load of 21.6 N (ISO 1133);

30,00% by weight of a heterophasic copolymer having a melt flow index of 0,8g/10min and a Vicat softening point of 150°C

3,00% by weight of an antistatic & slip masterbatch

All layers contained conventional stabilizer and neutralizing agent in effective amounts, e.g. below 0,15% by weight. Additionally both cover layers contained an effective amount of antistatic and slip agent, e.g. Armostat and a fatty acid amide.

After coextrusion, the coextruded three-layer film was taken off and cooled via a first take-off roll and a further trio of rolls, subsequently corona treated on one side. The chill roll temperature was about 20°C.

The multilayered cast film produced in this way had a surface tension of 40 dynes/cm on one side directly after production. The film had a thickness of approximately 100 $\mu$m, with the thickness of the top layers being about 40 $\mu$m. The film had a density of 0.925 g/cm$^3$.

Example 4

A film was produced as described in Example 3. The ratio of the white masterbatch was varied. The base layer contained 60% of the HCPP component, 20% of the HP component and 20% of a white masterbatch (based on random-propylene-ethylene-copolymer) having 60% of TiO2. The remainder of the composition and the production conditions were unchanged compared with Example 3.

The properties of the films according to the examples 3 and 4 are described in the table below.

| Properties | Unit | Example 3 | Example 4 | Test method |
|---|---|---|---|---|
| Tensile strength<br>MD<br>TD | <br>N/mm2<br>N/mm2 | <br>25<br>22 | <br>32<br>26 | ASTM D882 -<br>DIN 53455 |
| Elongation at break<br>MD<br>TD | <br>%<br>% | <br>500<br>570 | <br>550<br>600 | ASTM D882 -<br>DIN 53455 |
| C.O.F film/film<br>(Static) | | <br>0.50 | <br>0.50 | ASTM S1894 -<br>DIN 53375 |
| Gloss (45°) | % | 20 | 20 | ASTM D 2457 |
| Opacity (100$\mu$) | % | 74 | 75 | Macbeth D200-II |
| Treatment level | Dynes/cm | >40 | >40 | ASTM D 2578 |

All films according to the examples and the comparative examples were printed, cut into label shape and stacked. The label stacks were provided in the usual manner at the molding machine, and the stacks were prepared for removal of the labels. The equipment and operations necessary for this purpose are known in the prior art and are described, for example, in company publications by Hoechst Trespaphan. A molding machine with automatic label feed was charged with HD-PE molding material and run under the usual processing conditions for HD-PE.

The films according to the examples were separated well from the stack. The appearance of the labelled container was very good with the films according to the invention. Films according to the comparative examples showed various defects.

The raw materials and films were characterized using the following measurement methods:

Melt flow index

The melt flow index was measured in accordance with DIN 53 735 at a load of 21.6 N and 230°C.

Melting Point

DSC measurement, maximum of the melting curve, heating rate 20°C/min.

Surface tension
The surface tension was determined by the ink method (DIN 53 364).

Molecular weight determination Mw
The mean molecular weights Mw and Mn and the mean molecular weight dispersity Mw/Mn were determined in accordance with DIN 55 672, Part 1, by means of gel permeation chromatography. Instead of THF, ortho-dichlorobenzene was used as eluent. Since the olefinic polymers to be investigated are insoluble at room temperature, the entire measurement is carried out at elevated temperature ($\approx$135°C.).

Atactic Content
The atactic content of the polymer can be characterized by means of the insoluble/soluble content of the raw material in xylene. Usually, a Soxhlet extraction with boiling xylene is carried out, it being advantageous to fill the Soxhlet apparatus with a pressed disk instead of granules of the polymer. The thickness of the pressed disk here should not exceed 500 microns. For quantitative determination of the extractable content of the polymer, it is of crucial importance to ensure a sufficient extraction time of from 8 to 24 hours.

The operational definition of the insoluble content $PP_{iso}$ in percent is given by the ratio of the weights of the dried n-xylene-insoluble fraction to the sample weight:

$$PP_{iso} = 100 \times (\text{xylene-insoluble fraction/sample weight})$$

The remaining difference gives the soluble atactic content. The dried xylene extract shows that it generally does not consist of pure atactic polymer. In the extraction, aliphatic and olefinic oligomers, in particular isotactic oligomers, and also possible additives are also extracted in the measurement.

Chain isotacticity index / Stereoregularity

The chain isotacticity is determined by means of high-resolution $^{13}$C-NMR spectroscopy, where the NMR sample to be chosen is not the original raw material, but instead its n-xylene-insoluble fraction. In order to characterize the isotacticity of polymer chains, use is usually made in practice of the $^{13}$C-NMR spectroscopic triad isotacticity index II (triads

Crystallization

The crystallization temperature is determined by melting a polymer sample at 220°C. in a differential scanning calorimeter (DSC), Perkin Elmer Series 7, then cooling the sample at 10.degree. C. per minute. The peak temperature of the crystallization temperature is then reported as the crystallization temperature (Tc).

Curl tendency:

A film sheet in DIN A4 format is laid with either the underside or the upper side on a flat substrate. After any static charge has dissipated, whether and to what extent the edges of the film lift up from the substrate is assessed and, where appropriate, measured. The curl tendency is regarded as good if the edge height is less than 1 mm, moderate if it is up to 2 mm.

Segregation ability:

The frequency with which a handling machine takes more than one film sheet from the stack during loading of a sheet offset printing machine or the blow-molding machine is assessed. The destackability is regarded as good at an incorrect removal rate of less than 1:10,000, poor at greater than 1:5000.

Appearance of the labeled bottle:

The number and size of raised bubbles is assessed, and in addition the bubbles are classified by type and size.

**Claims**

1. Use of a mono or multilayered polypropylene cast film as a label in an in-mould labelling process, wherein the container is formed by injection molding, by blow molding or thermoforming, and wherein the cast film comprises at least one layer wherein said at least one layer comprises a two component polymer composition of a first component I and a second component II, **characterised in that** the first component I is a high crystallinity propylene homopolymer and the second component II is a heterophasic propylene copolymer, wherein the high crystallinity propylene homopolymer has an intermolecular stereoregularity of 94 to 99%, determined by $^{13}$C-NMR spectroscopy.

2. Cast film according to claim 1 **characterised in that**, the high crystallinity propylene homopolymer contains 98 to 100% by weight of propylene units.

3. Cast film according to claim 2 **characterised in that**, the high crystallinity propylene homopolymer has a melt flow index of 5 to 10 g/10min, determined in accordance with ISO 1133 at a load of 2,16kg and 230°Cand a melting point of 150 to 170°C, determined by as the maximum of the DSC melting curve measured at a heating rate of 20°C/min.

4. Cast film according to any of the preceding claims, **characterised in that**, the high crystallinity propylene homopolymer contains 1,5 to 5% by weight of xylene solubles, determined by Sohhlet extraction with boiling xylene.

5. Cast film according to any of the preceding claims, **characterised in that**, heterophasic propylene copolymer comprises a propylene homopolymer matrix and a dispersed elastomeric rubber phase.

6. Cast film according to any of the preceding claims, **characterised in that**, the heterophasic propylene copolymer contains 12 to 18% by weight of xylene solubles, determined by Sohhlet extraction with boiling xylene.

7. Cast film according to any of the preceding claims, **characterised in that**, the heterophasic propylene copolymer has an ethylene content of 5 to 15% by weight, based on the weight of the heterophasic propylene copolymer

8. Cast film according to any of the preceding claims, **characterised in that**, the heterophasic propylene copolymer has a melt flow index of 0,2 to 5g/10min. determined in accordance with ISO 1133 at a load of 2,16kg and 230°C.

9. Cast film according to any of the preceding claims, **characterised in that**, the heterophasic propylene copolymer has a Vicat softening point of 145 to 155°C, determined according to ISO 306 10N.

10. Cast film according to any of the preceding claims, **characterised in that,** the heterophasic propylene contains less than 5 - 20% by weight of the elastomeric rubber phase, based on the weight of the heterophasic propylene copolymer

11. Cast film according to any of the preceding claims, **characterised in that,** the dispersed elastomeric rubber phase is a ethylene propylene copolymer.

12. Cast film according to any of the preceding claims, **characterised in that**, the ethylen propylene copolymer rubber has an ethylen content of 40 to 65%.

13. Cast film according to any of the preceding claims, **characterised in that**, the two component polymer composition is a mixture of the two components.

14. Cast film according to any of the preceding claims, **characterised in that,** the two component polymer composition is a blend of the two components.

15. Cast film according to any of the preceding claims, **characterised in that**, the ratio of the two components I and II is in the range of from HCPP:HP = 90:10 to 50:50.

16. Cast film according to claim 15 wherein said ratio is in the range from HCPP:HP = 80:20 to 60:40.

17. Cast film according to any of the preceding claims, **characterised in that**, the base layer contains 75 to 100% by weight of the two components polymer composition, based on the weight of the layer.

18. Cast film according to any of the preceding claims, **characterised in that**, the base layer containing the two components polymer composition is at least 50% of the overall film thickness.

19. Cast film according to any of the preceding claims, **characterised in that**, a second layer containing 80 to 100% by weight of the two component polymer composition is provided on the first surface of the base layer.

20. Cast film according to any of the preceding claims, **characterised in that**, a third layer containing 80 to 100% by weight of the two component polymer composition is provided on the second surface of the base layer.

21. Cast film according to any of the preceding claims, **characterised in that**, one or two intermediate layers are provided between the outer layers and the base layer.

22. Cast film according to any of the preceding claims, **characterised in that**, the base layer contains 1000 to 3000 ppm of a nucleating agent.

23. Cast film according to any of the preceding claims, **characterised in that,** both cover layers contain an antistatic agent and a lubricant.

24. Cast film according to any of the preceding claims, **characterised in that**, the antistatic agent is glycerol monostearate and the slip agent is oleamid and/or stereoamid.

**Patentansprüche**

1. Verwendung einer ein- oder mehrschichtigen Polypropylen-Gießfolie als Etikett in einem Verfahrensschritt des In-Mould-Labelings, wobei der Behälter mittels Spritzgießen, Blasformen oder Thermoformen ausgebildet wird, und wobei die Gießfolie mindestens eine Schicht umfasst, wobei die mindestens eine Schicht eine Zweikomponenten-Polymerzusammensetzung aus einer ersten Komponente I und einer zweiten Komponente II umfasst, die **dadurch gekennzeichnet ist, dass** die erste Komponente I ein Propylen-Homopolymer mit hoher Kristallinität und die zweite Komponente II ein heterophasisches Propylen-Copolymer ist, wobei das Propylen-Homopolymer mit hoher Kristallinität eine intermolekulare Stereoregularität von 94 bis 99 % aufweist, die mittels $^{13}$C-NMR-Spektroskopie bestimmt ist.

2. Gießfolie nach Anspruch 1, **dadurch gekennzeichnet, dass** das Propylen-Homopolymer hoher Kristallinität 98 bis 100 Gew.-% Propyleneinheiten enthält.

3. Gießfolie nach Anspruch 2, **dadurch gekennzeichnet, dass** das Propylen-Homopolymer hoher Kristallinität einen Schmelzflussindex von 5 bis 10 g/10 min, gemäß ISO 1133 bei einer Prüflast von 2,16 kg und einer Prüftemperatur von 230 °C bestimmt, und einen Schmelzpunkt von 150 bis 170 °C aufweist, bestimmt als das Maximum der Schmelzkurve der Dynamischen Differenzkalorimetrie (DDK), die bei einer Aufheizgeschwindigkeit von 20 °C/min gemessen wurde.

4. Gießfolie nach einem der vorangehenden Ansprüche, **dadurch gekennzeichnet, dass** das Propylen-Homopolymer hoher Kristallinität 1,5 bis 5 Gew.-% Xylol-lösliche Anteile enthält, bestimmt mittels Soxhlet-Extraktion mit siedendem Xylol.

5. Gießfolie nach einem der vorangehenden Ansprüche, **dadurch gekennzeichnet, dass** das heterophasische Propylen-Copolymer ein Propylen-Homopolymer-Grundgerüst und eine feinverteilte elastomere Kautschukphase umfasst.

6. Gießfolie nach einem der vorangehenden Ansprüche, **dadurch gekennzeichnet, dass** das heterophasische Propylen-Copolymer 12 bis 18 Gew.-% Xylol-lösliche Anteile enthält, bestimmt mittels Soxhlet-Extraktion mit siedendem Xylol.

7. Gießfolie nach einem der vorangehenden Ansprüche, **dadurch gekennzeichnet, dass** das heterophasische Propylen-Copolymer einen Ethylengehalt von 5 bis 15 Gew.-%, bezogen auf das Gewicht des heterophasischen Propylen-Copolymers, aufweist.

8. Gießfolie nach einem der vorangehenden Ansprüche, **dadurch gekennzeichnet, dass** das heterophasische Propylen-Copolymer einen Schmelzflussindex von 0,2 bis 5 g/10 min aufweist, bestimmt gemäß ISO 1133 bei einer Prüflast von 2,16 kg und einer Prüftemperatur von 230 °C.

9. Gießfolie nach einem der vorangehenden Ansprüche, **dadurch gekennzeichnet, dass** das heterophasische Propylen-Copolymer einen Vicat-Erweichungspunkt von 145 bis 155 °C aufweist, bestimmt gemäß ISO 306 10N.

10. Gießfolie nach einem der vorangehenden Ansprüche, **dadurch gekennzeichnet, dass** das heterophasische Propylen-Copolymer weniger als 5 bis 20 Gew.-%, bezogen auf das Gewicht des heterophasischen Propylen-Copolymers, der elastomeren Kautschukphase aufweist.

11. Gießfolie nach einem der vorangehenden Ansprüche, **dadurch gekennzeichnet, dass** die feinverteilte elastomere Kautschukphase ein Ethylen-Propylen-Copolymer ist.

12. Gießfolie nach einem der vorangehenden Ansprüche, **dadurch gekennzeichnet, dass** der Ethylen-Propylen-Copolymer-Kautschuk einen Ethylengehalt von 40 bis 65 % aufweist.

13. Gießfolie nach einem der vorangehenden Ansprüche, **dadurch gekennzeichnet, dass** die Zweikomponenten-Polymerzusammensetzung ein Gemisch der zwei Komponenten ist.

14. Gießfolie nach einem der vorangehenden Ansprüche, **dadurch gekennzeichnet, dass** die Zweikomponenten-Polymerzusammensetzung ein Blend der zwei Komponenten ist.

15. Gießfolie nach einem der vorangehenden Ansprüche, **dadurch gekennzeichnet, dass** das Verhältnis der beiden Komponenten I und II in dem Bereich von ab HCPP:HP = 90:10 bis 50:50 liegt.

16. Gießfolie nach Anspruch 15, wobei das Verhältnis im Bereich von HCPP:HP = 80:20 bis 60:40 liegt.

17. Gießfolie nach einem der vorangehenden Ansprüche, **dadurch gekennzeichnet, dass** die Basisschicht 75 bis 100 Gew.-%, bezogen auf das Gewicht der Basisschicht, der Zweikomponenten-Polymerzusammensetzung enthält.

18. Gießfolie nach einem der vorangehenden Ansprüche, **dadurch gekennzeichnet, dass** die Basisschicht, welche die Zweikomponenten-Polymerzusammensetzung enthält, mindestens 50 % der Gesamtfoliendicke aufweist.

19. Gießfolie nach einem der vorangehenden Ansprüche, **dadurch gekennzeichnet, dass** eine zweite Schicht, die 80 bis 100 Gew.-% der Zweikomponenten-Polymerzusammensetzung enthält, auf der ersten Oberfläche der Basisschicht aufgebracht ist.

20. Gießfolie nach einem der vorangehenden Ansprüche, **dadurch gekennzeichnet, dass** eine dritte Schicht, die 80 bis 100 Gew.-% der Zweikomponenten-Polymerzusammensetzung enthält, auf der zweiten Oberfläche der Basisschicht aufgebracht ist.

21. Gießfolie nach einem der vorangehenden Ansprüche, **dadurch gekennzeichnet, dass** eine oder zwei Zwischenschichten zwischen den äußeren Schichten und der Basisschicht aufgebracht sind.

22. Gießfolie nach einem der vorangehenden Ansprüche, **dadurch gekennzeichnet, dass** die Basisschicht 1.000 bis 3.000 ppm eines Nukleierungsmittels enthält.

23. Gießfolie nach einem der vorangehenden Ansprüche, **dadurch gekennzeichnet, dass** beide Deckschichten ein Antistatikmittel und ein Gleitmittel enthalten.

24. Gießfolie nach einem der vorangehenden Ansprüche, **dadurch gekennzeichnet, dass** das Antistatikmittel Glycerolmonostearat und das Gleitmittel Oleamid und/oder Stearamid ist.

**Revendications**

1. Utilisation d'une pellicule moulée en polypropylène mono- ou multicouche en tant qu'étiquette dans un procédé d'étiquetage dans le moule, le récipient étant formé par moulage par injection, par moulage par extrusion-soufflage ou par thermoformage, et la pellicule moulée comprenant au moins une couche, ladite ou lesdites couches comprenant une composition de polymères à deux composants d'un premier composant I et d'un deuxième composant II, **caractérisée en ce que** le premier composant I est un homopolymère de propylène à haute cristallinité et le deuxième composant II est un copolymère de propylène hétérophasique, l'homopolymère de propylène à haute cristallinité ayant une stéréorégularité intermoléculaire de 94 à 99 %, déterminée par spectroscopie de RMN du [13]C.

2. Pellicule moulée selon la revendication 1,
**caractérisée en ce que**, l'homopolymère de propylène à haute cristallinité contient 98 à 100 % en poids d'unités propylène.

3. Pellicule moulée selon la revendication 2,
**caractérisée en ce que**, l'homopolymère de propylène à haute cristallinité a un indice de fusion de 5 à 10 g/10 min, déterminé selon ISO 1133 à une charge de 2,16 kg et à 230°C et un point de fusion de 150 à 170°C, déterminé comme le maximum de la courbe de fusion par DSC mesurée à un taux de chauffage de 20°C/minute.

4. Pellicule moulée selon l'une quelconque des revendications précédentes, **caractérisée en ce que**, l'homopolymère de propylène à haute cristallinité contient 1,5 à 5 % en poids de produits solubles du xylène, déterminé par extraction Soxhlet avec du xylène en ébullition.

5. Pellicule moulée selon l'une quelconque des revendications précédentes, **caractérisée en ce que**, le copolymère de propylène hétérophasique comprend une matrice d'homopolymère de propylène et une phase de caoutchouc élastomère dispersée.

6. Pellicule moulée selon l'une quelconque des revendications précédentes, **caractérisée en ce que**, le copolymère de propylène hétérophasique contient 12 à 18 % en poids de produits solubles du xylène, déterminé par extraction Soxhlet avec du xylène en ébullition.

7. Pellicule moulée selon l'une quelconque des revendications précédentes, **caractérisée en ce que**, le copolymère de propylène hétérophasique a une teneur en éthylène de 5 à 15 % en poids, par rapport au poids du copolymère de propylène hétérophasique.

8. Pellicule moulée selon l'une quelconque des revendications précédentes, **caractérisée en ce que**, le copolymère de propylène hétérophasique a un indice de fusion de 0,2 à 5 g/10 min, déterminé selon ISO 1133 à une charge de 2,16 kg et à 230°C.

9. Pellicule moulée selon l'une quelconque des revendications précédentes, **caractérisée en ce que**, le copolymère de propylène hétérophasique a un point de ramollissement Vicat de 145 à 155°C, déterminé selon ISO 306 10N.

10. Pellicule moulée selon l'une quelconque des revendications précédentes, **caractérisée en ce que**, le propylène hétérophasique contient moins de 5 à 20 % en- poids de la phase de caoutchouc élastomère, par rapport au poids du copolymère de propylène hétérophasique.

11. Pellicule moulée selon l'une quelconque des revendications précédentes, **caractérisée en ce que**, la phase de caoutchouc élastomère dispersée est un copolymère d'éthylène et de propylène.

12. Pellicule moulée selon l'une quelconque des revendications précédentes, **caractérisée en ce que**, le caoutchouc de copolymère d'éthylène et de propylène a une teneur en éthylène de 40 à 65 %.

13. Pellicule moulée selon l'une quelconque des revendications précédentes, **caractérisée en ce que**, la composition de polymères à deux composants est un mélange des deux composants.

14. Pellicule moulée selon l'une quelconque des revendications précédentes, **caractérisée en ce que**, la composition de polymères à deux composants est un alliage des deux composants.

15. Pellicule moulée selon l'une quelconque des revendications précédentes, **caractérisée en ce que**, le rapport des deux composants I et II se trouve dans la plage de HCPP/HP = 90/10 à 50/50.

**16.** Pellicule moulée selon la revendication 15, dans laquelle ledit rapport se trouve dans la plage de HCPP/HP = 80/20 à 60/40.

**17.** Pellicule moulée selon l'une quelconque des revendications précédentes, **caractérisée en ce que**, la couche de base contient 75 à 100 % en poids de la composition de polymères à deux composants, par rapport au poids de la couche.

**18.** Pellicule moulée selon l'une quelconque des revendications précédentes, **caractérisée en ce que**, la couche de base contenant la composition de polymères à deux composants représente au moins 50 % de l'épaisseur globale de la pellicule.

**19.** Pellicule moulée selon l'une quelconque des revendications précédentes, **caractérisée en ce que**, une deuxième couche contenant 80 à 100 % en poids de la composition de polymères à deux composants est fournie sur la première surface de la couche de base.

**20.** Pellicule moulée selon l'une quelconque des revendications précédentes, **caractérisée en ce que**, une troisième couche contenant 80 à 100 % en poids de la composition de polymères à deux composants est fournie sur la deuxième surface de la couche de base.

**21.** Pellicule moulée selon l'une quelconque des revendications précédentes, **caractérisée en ce que**, une ou deux couches intermédiaires sont fournies entre les couches extérieures et la couche de base.

**22.** Pellicule moulée selon l'une quelconque des revendications précédentes, **caractérisée en ce que**, la couche de base contient 1000 à 3000 ppm d'un agent de nucléation.

**23.** Pellicule moulée selon l'une quelconque des revendications précédentes, **caractérisée en ce que**, les deux couches de couverture contiennent un agent antistatique et un lubrifiant.

**24.** Pellicule moulée selon l'une quelconque des revendications précédentes, **caractérisée en ce que**, l'agent antistatique est le monostéarate de glycérol et l'agent de glissement est un oléamide et/ou un stéréoamide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5948839 A
- US 5594070 A
- EP 0757069 A
- US 5063264 A

### Non-patent literature cited in the description

- **J. L. Koenig ; A, Van Roggen.** Integrated Infrared Band Intensity Measurement of Stereoregularity in Polypropylene. *Journal of Applied Polymer Science,* 1965, vol. 9, 359-367
- **Jack L. Koenig.** Chemical Microstructure of Polymer Chains. Wiley-Interscience Publication, John Wiley and Sons
- **W.O. Crain, Jr. ; A. Zambelli ; J.D. Roberts.** *Macromolecules,* 1971, vol. 4, 330
- **A. Zambelli ; G. Gatti ; C. Sacchi ; W.O. Crain, Jr. ; J.D. Roberts.** *Macromolecules,* 1971, vol. 4, 475
- **C.J. Carman ; C.E. Wilkes.** *Rubber Chem. Technol.,* 1971, vol. 44, 781